# FASCICULE DE BREVET EUROPEEN

(11) **EP 2 944 655 B1**
(45) Date de publication et mention de la délivrance du brevet: **28.12.2016**
(21) Numéro de dépôt: 15162106.7
(22) Date de dépôt: 15.09.2010
(51) Int. Cl.: C08F 4/28, C09J 4/00

(54) **ADHESIF STRUCTURAL BI-COMPOSANT**
ZWEI-KOMPONENTEN STRUKTURKLEBER
TWO-PART STRUCTURAL ADHESIVE

(30) Priorité: 16.09.2009 FR 0904428
(43) Date de publication de la demande: 18.11.2015
(62) Demande divisionnaire de: 10755142.6
(73) Titulaire: Jacret, 95500 Le Thillay (FR)
(72) Inventeur: Curet, Arnaud, 60300 SENLIS (FR)
(74) Mandataire: Flesselles, Bruno F.G.

(56) Documents cités:
- EP-A1- 1 932 882
- EP-A2- 0 930 322
- WO-A2-03/040248
- US-A1- 2007 187 034

## Description

La présente invention se rapporte au domaine des adhésifs structuraux, notamment acryliques (à base d'acrylate ou de méthacrylate) et à leurs applications.

Les adhésifs structuraux sont une bonne alternative aux autres techniques mécaniques pour lier entre eux deux matériaux, tels les métaux ou les plastiques. En effet, la répartition de force est meilleure par collage que lorsque l'on utilise des techniques alternatives telles que le rivetage ou la soudure. De plus, l'utilisation du collage permet souvent de travailler plus rapidement, et présente également l'avantage de proposer une meilleure isolation contre des éléments externes (poussière, humidité) que les technologies mécaniques.

Les adhésifs structuraux sont ainsi utilisés dans de nombreux domaines industriels, y compris pour le collage de composites.

Les adhésifs structuraux sont composés de deux éléments à savoir un élément catalyseur servant à mettre en oeuvre la polymérisation de l'autre élément, une résine contenant des monomères. Il existe ainsi trois types d'adhésifs bi-composants (époxy, polyuréthanes et acryliques) en fonction de la nature du monomère présent dans la résine.

Les adhésifs acryliques sont particulièrement intéressants dans notamment en terme de profil de polymérisation, et de possibilité d'utilisation sur des surfaces non-préparées préalablement.

Toutefois, les résultats de collage de matériau composites avec ces adhésifs peuvent s'avérer présenter des performances inférieures à celles obtenues avec les adhésifs époxydes, notamment pour les composites fabriqués dans des moules fermés. On peut ainsi citer les RTM (*Resin Transfer Molded*), les SMC *(Sheet Molded Compounds,* pré-imprégnés à base de feuilles) ou les pultrudés (composite polyester/fibre de verre).

Les composites RTM sont obtenus par un procédé de moulage par injection de résine polyester sur un mat de fibres de verre, moule hermétiquement fermé. On vient faire le vide pour permettre à la résine de mieux fluer et ainsi de supprimer les défauts tels que bulles ou manques.

Certaines solutions ont été proposées pour améliorer les propriétés de collage des adhésifs acryliques (à base (méth)acrylate). On peut ainsi citer les étapes de préparation des surfaces, telles que décrites dans US 3,838,093. Ainsi, il peut s'avérer nécessaire d'abraser puis de dégraisser à l'alcool isopropylique la surface de certains RTM afin d'éliminer d'éventuels agents, susceptibles de provoquer des défauts d'accroche importants par migration à la surface.

On peut également citer l'enseignement de WO 03/040248, qui rappelle très justement les difficultés pour réaliser une adhésion d'adhésifs à base (méth)acrylate sur les composites tels que les RTM, notamment en raison de la présence d'agents plastifiants (tels le phthalate de dibutyle, et/ou de diisobutyle et/ ou de benzyle) dans la composition catalytique (contenant les initiateurs de polymérisations). Ainsi, les agents plastifiants peuvent migrer dans le matériau à coller, ou en extraire certains composés tels que des inhibiteurs ou des agents de démoulage, qui pénètrent dans l'interface adhésive. La force de collage peut être donc fortement réduite.

WO 03/040248 propose de résoudre ce problème par la formulation d'une résine (méth)acrylate particulière.

Les demandes de brevets WO 2008/080913 et WO 2008/125521 proposent également l'ajout de composants dans les résines (méth)acrylates permettant d'obtenir une meilleure adhésion sur les composites.

La Demanderesse a maintenant mis au point une formulation de l'agent catalyseur permettant d'améliorer sensiblement les performances mécaniques des adhésifs (méth)acrylates sur des substrats composites. On améliore ainsi la résistance au cisaillement lors d'une adhésion sur composite et notamment sur tous les composites fabriqués dans les moules fermés.

La problématique du collage sur composite est de ne pas obtenir de rupture adhésive en cas de contrainte mécanique. Il s'agit donc plutôt d'obtenir au moins une rupture d'une des deux pièces.

Les propriétés de l'adhésif pour cette résistance au cisaillement par traction peuvent être déterminées par un test basé sur la norme ISO 4587, en utilisant deux éprouvettes en RTM. On recherche une résistance au cisaillement par traction supérieure à 2 MPa, de préférence supérieure à 2,5 MPa, de façon plus préférée supérieure à 3 MPa, sur le base de ce test.

De fait, une rupture adhésive révèle un défaut d'accroche de la colle structurale sur le RTM qui risque d'initier des décollements provoquée par des infiltrations d'eau, des chocs thermiques, des vibrations, etc. De nombreuses pièces de carrosseries automobiles sont réalisées en RTM et doivent être collées structurellement sans aucun défaut d'accroche.

Cet agent catalyseur contient des initiateurs de polymérisation à radicaux libres, et est ajouté à la résine contenant les agents monomères, pour en initier la polymérisation, assurant ainsi la jonction cohésive de deux matériaux.

L'invention se rapporte ainsi à une composition utilisable dans un adhésif structural, comprenant un agent initiateur de polymérisation à radicaux libres ainsi qu'un silane époxydé.

Les silanes époxydés sont bien connus dans l'art. La demande WO 02/051899 cite ainsi une liste de silanes epoxydés. Dans le cadre de la composition selon l'invention, on peut ainsi utiliser un silane epoxydé choisi parmi le β-(3,4-epoxycyclohexyl)-ethyltrimethoxysilane, le β-(3,4-epoxycyclohexyl)ethyl-triethoxysilane, le γ-Glycidoxypropyltrimethoxysilane, le γGlycidoxy-propylmethyl-dimethoxysilane, le γ-Glycidoxypropylmethyldiethoxysilane, le γ-Glycidoxypropyl-methyltriethoxysilane, le 3-Glycidyloxypropyltriethoxysilane (GLYEO), et le 3-Glycidyloxypropyltrimethoxysilane (GLYMO)

Le β-(3,4-epoxycyclohexyl)ethyl-triethoxysilane, vendu notamment sous le nom de Coatosil 1770 (Momentive Performance Materials, Wilton, CT, États-Unis) est particulièrement adapté à une mise en oeuvre dans une composition selon l'invention.

On peut également utiliser des oligomères époxy silane fonctionnels tels que le CoatOsil MP 200 cross linker (Momentive Performance Materials).

Le silane epoxydé est généralement compris entre 1 à 30 %, de préférence entre 5 et 20 % (en poids) de la composition.

L'utilisation d'un silane epoxydé (époxysilane) dans une composition selon la présente invention permet de diminuer de façon importante la présence d'agents plastifiants dans la composition.

De fait, on peut ainsi obtenir des compositions comprenant moins de 20 % d'agent plastifiant. Dans certains modes de réalisations, les compositions selon l'invention contiennent moins de 15 %, voire moins de 12 % ou moins de 10 % (en poids) d'un agent plastifiant. Le terme « moins de xxx % » est entendu comme comprenant la borne supérieure, et signifiant contenant « au plus xxx % ».

L'agent initiateur de polymérisation à radicaux libres est bien connu de l'homme du métier. Ainsi, il s'agit d'un agent oxydant, qui réagit avec les composés réducteurs (amines) présents dans la résine. Cet agent peut ainsi être un peroxyde, tel que le peroxyde de benzoyle et tout autre peroxyde de diacyle, un hydroperoxyde tel que l'hydroperoxyde de cumène, un perester tel que le P-butylperoxybenzoate ou le tertbutylperoxybenzoate, un hydroperoxyde cétonique tel que l'hydroperoxyde de méthyle-éthyle-cétone. Il peut aussi être un sel organique de métal de transition, tel que le naphthénate de cobalt, ou un composé contenant une chlorine labile, tel que chloride de sulfonyle.

De façon habituelle, la composition contient entre 0,5 et 50 % (en poids) de cet agent initiateur de polymérisation, de façon plus préférée entre 5 et 40 % de façon la plus préférée entre 10 % et 20 % en poids. Dans un mode de réalisation préféré, la composition contient environ 20 % en poids de l'agent initiateur de polymérisation. L'agent préféré est le peroxyde de benzoyle. Si l'on souhaite ralentir la vitesse de polymérisation pour augmenter la durée d'application de l'adhésif, on peut utiliser de l'ordre de 10 % en poids d'agent initiateur de polymérisation. La composition selon l'invention peut contenir également des charges, notamment des charges minérales, telles que silice, carbonate de calcium ou titane.

Elle peut également contenir des agents stabilisants, des agents épaississants, des agents débullants ou des agents colorants.

Dans un mode de réalisation particulier, la composition contient en outre une résine époxyde (ou résine époxyde). De tels agents sont décrits dans l'art, et notamment dans WO 2003/097756. Cette résine époxyde est présente dans une quantité comprise entre 10 et 60 % (en poids) dans la composition, de préférence entre 15 et 45 %, de façon plus préférée entre 20 et 30 %.

Le terme "résine époxyde" couvre un nombre important de composés, et notamment l'oxyde octadécylène, le glycidylméthacrylate, l'éther diglycidyl de bisphénol A, le dioxyde de vinylcyclohéxène le 4-époxycyclohexylméthyl-3, le 4-époxycyclohexane carboxylate, les époxy-cresol-novolacs, époxy-phénol-novolacs, les résines époxydes à base de bisphénol A.. D'autres composés utilisables dans la composition selon l'invention sont cités dans WO 2003/097756.

On préfère utiliser des résines époxydes liquide basées sur le bisphénol A, qui sont relativement peu chères, notamment le diglycidyl éther de bisphénol A.

La composition selon l'invention est utilisée pour induire la polymérisation d'une résine (méth)acrylique, c'est-à-dire à base de monomères acrylates ou méthacrylates (pouvant être obtenus par estérification d'un alcool et d'un acide méthacrylique ou acrylique). On utilise généralement la composition selon l'invention dans un ratio (en volume) de 1 : 1 à 1 : 30, de préférence de 1 : 5 à 1 : 30 de façon encore plus préférée environ 1 : 10 par rapport à ladite résine (1 part de la composition selon l'invention est mélangée à 10 parts de la résine).

Dans un mode de réalisation préféré, on utilise des cartouches comprenant un compartiment contenant la résine polymérisable et un autre compartiment contenant la composition selon l'invention. Les deux parties sont mélangées au moment de l'utilisation, afin d'initier la polymérisation. Ce mélange est ainsi réalisé *via* un mélangeur statique dans la buse. Ce système permet de doser la quantité d'adhésif lors de l'application, ce qui est intéressant pour des applications à grande échelle. Ainsi, après mélange des deux produits, une ou les deux surfaces à assembler sont enduites avec le système adhésif, et les surfaces sont placées en contact les unes avec les autres.

Un tel système de présentation et d'utilisation d'adhésifs (méth)acryliques est bien connu dans la technique. Il est notamment décrit dans WO 03/097756 (qui se réfère au composant B pour les compositions ayant le même rôle d'initiation de polymérisation que la composition selon l'invention, et au composant A pour les résines (méth)acryliques).

La résine contient ainsi des monomères (méth)acryliques. Dans un mode de réalisation préféré, il s'agit d'un monomère méthacrylate. On choisit de préférence un monomère méthacrylate dans lequel la partie alcool présente une chaîne linéaire courte (c'est-à-dire ayant un ou deux atomes de carbones). Ainsi, les monomères préférés sont le méthacrylate de méthyle et le méthacrylate d'éthyle.

Dans un autre mode de réalisation, la partie alcool présente au moins un cycle, qui peut être substitué ou non. Ainsi, dans ce mode de réalisation, les monomères peuvent notamment être choisis parmi le méthacrylate de tétrahydrofurfuryle, le méthacrylate de phénoxyéthyle, le méthacrylate d'isobornyle, le méthacrylate de glycidylether, le méthacrylate de benzyle, le méthacrylate de cyclohexyle, le méthacrylate de triméthylcyclohéxyle.

Des mélanges de ces esters peuvent également être utilisés. Le pourcentage en poids de monomère (méth)acrylate dans la résine est préférentiellement compris entre 20 et 80 %, de façon plus préférée entre 30 à 65 %, de façon encore plus préférée de 42 à 58 % soit environ autour de 50 %.

Dans un mode de réalisation particulier, la résine contient également au moins un monomère ester acrylate dans lequel la partie alcool présente une chaîne linéaire d'au moins 6 atomes de carbones (à chaîne longue). Ainsi, on utilise préférentiellement du méthacrylate de lauryle, du méthacrylate de 2-éthylhexyle, de l'acrylate de 2-éthylhexyle, des esters à base de polyéthylène-glycol, ou des mélanges de ces esters. Il est préférable que la résine contienne au plus 10 %, de façon plus préférée au plus 8%, voire au plus 5% en poids au total de ces monomères acryliques à chaîne longue. Dans un mode de réalisation particulier, la résine comprend un mélange de deux monomères esters acryliques à chaîne longue. De façon préférée, lorsque la résine ne contient qu'un seul monomère ester acrylique, il est préféré qu'il soit présent à une quantité inférieure ou égale à 8 % en poids, alors qu'il est acceptable qu'il y en ait à une quantité comprise entre 8 et 10 % lorsque la résine contient un mélange de ces esters. Dans ce cas, on préfère que chacun soit au plus présent à 5 %.

La résine peut également contenir d'autres monomères tels que l'acrylonitrile, le méthacrylonitrile, ou le styrène.

La résine peut également contenir un copolymère bloc élastomérique contenant du styrène (notamment un copolymère bloc élastomérique contenant du styrène et de l'isoprène, un copolymère bloc élastomérique contenant du styrène et du butadiène ou de l'éthylène) ou un mélange de différents copolymères bloc.

Ainsi, elle peut contenir un copolymère bloc styrène - isoprène - styrène (SIS), un copolymère styrène - butadiène - styrène (SBS), un copolymère styrène - isoprène - butadiène - styrène (SIBS), ou un copolymère styrène - éthylène - butylène- styrène (SEBS). Elle peut également contenir des mélanges de ces composés, et notamment des mélanges SIS / SBS, SIS / SIBS et SIS / SBS / SIBS.

De préférence, la composition selon l'invention comprend entre 5 et 30 % en poids, de préférence entre 12 et 25 %, de façon plus préférée entre 15 et 25 %, du ou des copolymère(s) bloc élastomérique(s).

La résine peut également contenir un élastomère. Si besoin est, il est fonctionnalisé (présentant une double liaison à ses extrémités, en particulier des fonctions méthacrylate pour améliorer les liaisons avec les monomères). Dans certains cas, on choisit un élastomère liquide. On utilise de préférence au moins un élastomère fonctionnalisé, seul ou en mélange avec au moins un élastomère non-fonctionnalisé.

Lorsque la résine contient un ou plusieurs copolymères bloc élastomériques (voir ci-dessous), l'élastomère est choisi de telle sorte qu'il soit compatible en solution avec les copolymères blocs utilisés. En particulier, on le choisit tel que son paramètre de solubilité d'Hildebrand soit compatible avec les paramètres de solubilité d'Hildebrand des copolymères blocs utilisés. En particulier, on le choisit de telle sorte que sa valeur ne diffère pas de plus de 10 % de la moyenne des valeurs des paramètres de solubilité d'Hildebrand des copolymères bloc utilisés. Le paramètre de solubilité d'Hildebrand est bien connu et se calcule par la racine carrée de la densité d'énergie cohésive du composé. Le paramètre de solubilité d'Hildebrand est directement lié aux forces de dispersion (forces de Van der Waals) qui s'exercent entre les molécules d'une substance chimique. On utilise ainsi de préférence des élastomères de type homopolymères polybutadiène (que l'on choisit alors préférentiellement liquide et fonctionnalisé), polyisoprène, ou polychloroprène. On peut également utiliser des élastomères copolymères butadiène-acrylonitrile notamment fonctionnalisés. Les fonctionnalités sont portées par les chaînes terminales et les groupements fonctionnels utilisables sont des groupements carboxyle (COOH), amine (NH or NH2), méthacrylate vinyliques ou époxy. On peut ainsi utiliser un polybutadiène fonctionnalisé tel que le HYPROTM VTB 2000x168 (terminaisons vinyliques), seul ou en mélange avec un polychloroprène ou un polybutadiène non-fonctionnalisé tel que le HYPROTM CTB 2000x162 (terminaisons carboxyles) (Emerald Performance Materials (EPM), Cuyahoga Falls, Ohio, USA). On peut également utiliser les HYPROTM VTBNX ou CTBNX (copolymères butadiène - acrylonitrile) ayant respectivement des fonctionnalités carboxyle et vinyliques, et plus particulièrement les HYPROTM VTBNX 1300x43 ou 1300x33.

Cet élastomère est favorablement présent à une quantité comprise entre 4 et 30 % en poids dans la composition selon l'invention, de préférence entre 6 et 15 %, de façon plus préférée entre 8 et 12 %. On utilise une quantité moindre d'élastomère lorsque la composition contient un ou plusieurs copolymères bloc.

Si la résine contient un ou plusieurs copolymères bloc, les proportions relatives du mélange copolymères bloc et de l'élastomère sont comprises entre 4 : 1 et 0,5 : 1 en poids dans la composition, de préférence d'environ 2 : 1. Toutefois, on peut également avoir des proportions relatives de l'ordre d'environ 0,5 : 1.

La composition selon l'invention peut également contenir des particules polymériques élastomériques, appelées « core-shell » en anglais, bien connues de l'homme du métier, (décrites notamment dans US 3,985,703, US 4,304,709, US 6,433,091, EP 1256615 ou US 6,869,497) et formées d'une coquille thermoplastique « dure », préférentiellement à base de polyméthacrylate de méthyle (PMMA), et d'un coeur élastomérique généralement à base de butadiène, souvent copolymérisé avec du styrène, ou à base acrylique.

On peut notamment citer, dans la mise en oeuvre de l'invention, les polymères acrylonitrile-butadiène-styrène (ABS), méthacrylate-butadiène-styrène (MBS), méthacrylate-acrylonitrile-butadiène-styrène (MABS), méthacrylate-acrylonitrile et les mélanges de ceux-ci.

On préfère notamment des particules modificatrices d'impact, et en particulier les MBS modificateurs d'impact (MBS impact modifiers). Dans un mode de réalisation préféré, ces MBS présentent une faible réticulation du polymère formant le coeur. De plus, ces MBS, outre leur résistance à l'impact, présentent également de préférence une résistance au craquement induit par les chocs.

On utilise ainsi notamment les particules de type Clearstrength C301, C303H, C223, C350, C351, E920, C859 ou Durastrength D300 ou D340 d'Arkema (Paris, France), les MBS C301 et C303H étant préférés. On peut également utiliser les MBS développés par Rohm et Haas (Philadelphie, PA, Etats-Unis), notamment le ParaloidTM BTA 753.

Ces particules peuvent être utilisées seules ou en mélange. Ainsi, dans un mode de réalisation particulier de l'invention, on utilise un mélange de particules MBS (en particulier les C303H, C301) et de particules présentant une enveloppe PMMA et un coeur acrylonitrile (notamment les particules D340).

De préférence, ces particules sont présentes dans la composition dans une quantité comprise entre 2 et 20 % en poids de la composition, de préférence entre 5 et 15 % en poids.

La résine peut également contenir un monomère acide tel qu'un monomère acide polymérisable par radicaux libres connu dans l'art du type acide carboxylique unsaturé, acide maléique, acide crotonique, acide isophtalique, acide fumarique et de préférence de l'acide méthacrylique.

On peut également ajouter de l'isobornyl acrylate (IBXA), du 2-hydroxy-éthyl-méthacrylate (HEMA), du 2-hydroxypropylméthacrylate (HPMA), du 2-(perfluorooctyl)éthyl acrylate (POA), du tétrahydrofurfuryl acrylate (THFA), de l'isobutoxyméthylacrylamide (IBMA). On peut ajouter des mélanges de ces composés, notamment un mélange de HEMA et HPMA.

De préférence, la résine contient de l'acide méthacrylique, de l'acide acrylique, et/ou de l'HEMA. On ajoute entre 2 et 10 % de chacun de ces composés, de préférence entre 3 et 7 %.

La résine selon l'invention peut également contenir au moins un composé supplémentaire tel qu'un agent de rhéologie, un accélérateur de polymérisation ou un promoteur d'adhésion.

L'agent rhéologique sert à garantir une bonne viscosité de la composition selon l'invention, afin qu'elle puisse être aisément appliquée sur les surfaces à coller. On peut utiliser des polyamides telles que le Disparlon 6500 (Kusumoto Chemicals Ltd, Japon) ou des éléments pulvérulents à base de silice ou équivalents (silice pyrogénée ou silice fumée non traitée).

L'accélérateur de polymérisation sert à favoriser la polymérisation et le durcissement de l'adhésif lorsque l'on rajoute le catalyseur. Il s'agit d'une amine tertiaire, préférentiellement aromatique, telle que la diméthyl para-toluidine, et/ou le 2,2'-(p-tolylimino)diéthanol. On peut également utiliser le Leuco Crystal Violet (LCV).

Le promoteur d'adhésion est notamment un ester de phosphate méthacrylé, tel que l'ester phosphate 2-hydroxyéthyl de méthacrylate (Genorad 40 de Rahn AG, Zürich, Suisse).

D'autres éléments tels que des charges minérales (TiO2, CaCO3, Al2O3, phosphate de zinc), des agents résistants aux ultraviolets (tels que la 2-hydroxyphenyltriazine, Tinuvin 400 de Ciba-Geigy), de la cire, peuvent également être ajoutés à la résine. De faibles quantités d'inhibiteurs de polymérisation à radicaux libres tels que le BHT, ou des benzoquinones comme la naphtoquinone, l'hydroquinone ou l'éthylhydroquinone peuvent aussi être ajoutés pour augmenter la durée de vie de la résine.

La résine peut également contenir des silanes. On choisit des silanes présentant des fonctionnalités vinyle, methacrylate/acrylate ou amine (silanes vinylés, acrylés ou aminés).

Des résines utilisables dans le cadre de la présente invention, ainsi que leurs applications sont décrites en détail dans les demandes WO 2008/080913 et WO 2008/125521.

La composition selon l'invention est utilisée avec une résine acrylique pour promouvoir l'adhésion de substrats les uns sur les autres, et est particulièrement intéressante lorsqu'il convient de coller un matériau sur un matériau composite.

On peut ainsi effectuer des collages de métaux, plastiques, matériaux composites sur des matériaux composites. Les applications sont donc notamment dans le domaine de la construction de silos, d'éoliennes, de bateaux ou de remorques de camions. On peut également utiliser les systèmes décrits dans l'invention dans le domaine de la construction automobile, ou le domaine ferroviaire.

Ainsi, le système résine / composition selon l'invention permet l'adhésion d'un matériau sur un autre matériau, l'un ou l'autre matériau étant notamment un métal, un plastique, du bois ou un matériau composite. On peut donc utiliser la composition dans l'une ou l'autre des applications suivantes : adhésion métal / métal, métal / composite, métal / plastique, métal / bois, bois / plastique, bois / composite, bois / bois, plastique / composite, plastique / plastique ou composite / composite.

On utilise en particulier les systèmes selon l'invention pour promouvoir l'adhésion de pièces sur les composites obtenus dans des moules fermés, et notamment sur les RTM (Resin Transfer Molded).

Afin d'améliorer les performances adhésives, on peut traiter ces composites préalablement à l'adhésion. Ce traitement consiste en une étape de ponçage et/ou une étape de nettoyage pour supprimer les éléments susceptibles de s'opposer à la polymérisation, et qui sont présents à la surface des composites tels que les RTM (notamment les agents de démoulage). Le nettoyage peut être réalisé avec de l'alcool isopropylique.

### Exemple

La résistance au cisaillement par traction (Rc) est mesurée selon un protocole dérivant de la norme ISO 4587. Brièvement, on utilise des éprouvettes en composite de dimensions 100 x 25 x 1,6 mm (L x I x e). Deux éprouvettes sont collées l'une sur l'autre, la zone de recouvrement étant de 25 x 12 mm (300 mm²), avec une épaisseur du joint de colle d'environ 200 à 400 µm. On mesure ensuite la force nécessaire pour rompre l'adhésion en tirant sur les deux éprouvettes. On recherche l'arrachement de la surface de contact d'une des deux éprouvettes. L'allongement à la rupture est observé selon une méthode décrite notamment par la norme ISO 527, la vitesse d'étirement de l'adhésif étant constante et de 50 mm / mn.

On prépare deux compositions contenant les initiateurs de polymérisation à radicaux libres.

### Composition I :

| | |
|---|---|
| Epon 828 (résine époxyde liquide) | 22 % |
| Agent plastifiant (Diisobutyl phthalate) | 12 % |
| Titane Millenium Chemicals | 23 % |
| Agent débullant (Byk 088) | 1 % |
| Silice (Cab-O-Sil M5), agent épaississant | 2 % |
| Peroxyde de benzoyle à 50% en pâte | 40 % |

### Composition Il :

| | |
|---|---|
| Epon 828 (résine époxyde liquide) | 20 % |
| Silane epoxydé (Coatosil 1770) | 5 % |
| Titane | 20 % |
| Agent débullant (Byk 088) | 1 % |
| Silice (inerte et Cab-O-Sil M5) | 14 % |
| Peroxyde de benzoyle à 50% en pâte | 40 % |

Le peroxyde de benzoyle en pâte utilisé contient environ 50 % de peroxyde de benzoyle, environ 25 % d'agent plastifiant, et environ 25 % de charges, de stabilisants, et d'agents rhéologiques.

Les deux compositions contiennent ainsi environ 20 % de peroxyde.

La composition I contient environ 22% d'agent plastifiant, alors que la composition Il ne contient que 10 % d'agent plastifiant (provenant de la source de peroxyde). L'agent plastifiant a été remplacé, dans la composition II, par des charges inertes (silice) ainsi que par le silane epoxydé.

Ces agents initiateurs de polymérisation sont utilisés avec la résine :

| | | |
|---|---|---|
| Méthacrylate de méthyle | AtoFinaElf | 42,3 % |
| Copolymère SIS | D1160, Kraton Polymers | 16 % |
| Copolymère SIBS | MD6455, Kraton Polymers | 5 % |
| Elastomère | VTB, Hans Chemie | 7,5 % |
| monomère ester acrylate | A2EH, AtoFinaElf | 4 % |
| monomère ester acrylate | HEMA, Cray Valley | 4 % |
| Promoteur d'adhésion | Genorad 40, Rahn | 2 % |
| Monomère acide | AMA, AtoFinaElf | 4 % |
| accélérateur de polymérisation | DMPT, PTE, Pergan | 1 % |
| Particules élastomériques | C303H, Arkema | 10,7 % |
| Agent de rhéologie | Disparlon 6500, Kusumoto Chemicals | 2,5 % |
| Autres Charges | | 1,1 % |

On mélange la résine et l'agent initiateur de polymérisation (composition I ou composition II) dans un ration 10:1 (en volume), soit 10 parts de résine pour une part d'agent à base de peroxyde.

On mesure la résistance au cisaillement Rc, et l'allongement à la rupture de la résine.

Les éprouvettes en RTM sont préparées par ponçage au grain 80, et nettoyage à l'alcool isopropylique.

| | Composition I + Résine | Composition II + Résine |
|---|---|---|
| Rc | rupture adhésive à 100% de la surface de collage à 1,1 MPa | rupture du substrat à 100% de la surface de collage à 3,4 MPa |
| Allongement à la rupture | 137,3% | 130,3% |

On observe donc une meilleure résistance au cisaillement lorsque la composition catalytique contient un silane epoxydé, en maintenant les propriétés d'allongement de l'adhésif.

## Revendications

1. Adhésif structural bi-composant comprenant :
a. Une résine (méth)acrylique contenant des monomères acrylates ou méthacrylates
b. Un agent catalyseur de polymérisation, destiné à être ajouté à ladite résine afin d'initier la polymérisation desdits monomères, comprenant un agent initiateur de polymérisation à radicaux libres ainsi qu'un silane epoxydé, ledit silane epoxydé étant compris entre 1 et 30 % en poids.

2. Adhésif structural bi-composant selon la revendication 1, **caractérisé en ce que** ledit silane epoxydé est compris entre 5 et 20 % en poids de l'agent catalyseur de polymérisation.

3. Adhésif structural bi-composant selon la revendication 1 ou 2, **caractérisée en ce que** l'agent catalyseur de polymérisation comprend au plus 20 % (en poids) d'agent plastifiant.

4. Adhésif structural bi-composant selon l'une des revendications 1 à 3, **caractérisée en ce que** l'agent initiateur de polymérisation à radicaux libres présent dans l'agent catalyseur de polymérisation est un peroxyde.

5. Adhésif structural bi-composant selon la revendication 4, **caractérisée en ce que** ledit peroxyde est le peroxyde de benzoyle.

6. Adhésif structural bi-composant selon l'une des revendications 1 à 5, **caractérisée en ce que** l'agent catalyseur de polymérisation contient entre 5 et 40 % en poids d'agent initiateur de polymérisation.

7. Adhésif structural bi-composant selon l'une des revendications 1 à 6, **caractérisée en ce que** l'agent catalyseur de polymérisation contient entre 10 et 20 % en poids d'agent initiateur de polymérisation.

8. Adhésif structural bi-composant selon l'une des revendications 1 à 7, **caractérisée en ce que** l'agent catalyseur de polymérisation contient en outre une résine époxyde.

9. Adhésif structural bi-composant selon l'une des revendications 1 à 8, **caractérisée en ce que** l'agent catalyseur de polymérisation contient en outre des charges minérales.

10. Adhésif structural bi-composant selon l'une des revendications 1 à 9, **caractérisé en ce que** lesdits monomères de ladite résine sont choisis parmi le méthacrylate de méthyle et le méthacrylate d'éthyle.

11. Adhésif structural bi-composant selon l'une des revendications 1 à 9, **caractérisé en ce que** ladite résine contient en outre au moins un autre élément choisi parmi un copolymère bloc élastomérique contenant du styrène et de l'isoprène, un copolymère bloc élastomérique contenant du styrène et du butadiène ou de l'éthylène, un élastomère, un monomère ester acrylate dans lequel la partie alcool présente au moins une chaîne linéaire d'au moins 6 atomes de carbones, un accélérateur de polymérisation, un agent de rhéologie, un promoteur d'adhésion, un monomère acide, des particules formées d'une coquille thermoplastique et d'un coeur élastomérique (particules acrylonitrile-butadiène-styrène, méthacrylate-butadiène-styrène, méthacrylate-acrylonitrile-butadiène-styrène, méthacrylate-acrylonitrile et les mélanges de celles-ci).

12. Adhésif structural bi-composant selon la revendication 11, **caractérisé en ce que** ladite résine contient au moins un copolymère bloc choisi dans le groupe constitué des copolymères styrène - isoprène - styrène (SIS), styrène - butadiène - styrène (SBS), styrène - isoprène - butadiène - styrène (SIBS), styrène - éthylène - butylène- styrène (SEBS) et des mélanges de ces copolymères.

13. Adhésif structural bi-composant selon la revendication 11 ou 12, **caractérisé en ce que** ladite résine contient un élastomère choisi dans le groupe constitué du polybutadiène fonctionnalisé, du polyisoprène et du polychloroprène.

14. Adhésif bi-strucural selon l'une des revendications 11 à 13, **caractérisé en ce que** ladite résine contient un monomère acide choisi dans le groupe constitué de l'acide carboxylique insaturé, l'acide maléique, l'acide crotonique, l'acide isophtalique, l'acide fumarique et l'acide méthacrylique, et/ou un composant choisi dans le groupe constitué de l'isobornyl acrylate (IBXA), le 2-hydroxy-éthyl-méthacrylate (HEMA), le 2-hydroxypropylméthacrylate (HPMA), le 2-(perfluorooctyl)éthyl acrylate (POA), le tétrahydrofurfuryl acrylate (THFA), l'isobutoxyméthylacrylamide (IBMA) et les mélanges de ces composés, notamment le mélange de HEMA et HPMA.

15. Cartouche pour application d'un adhésif structural bi-composant selon l'une des revendications 1 à 14, comprenant
a. un compartiment contenant ladite résine (méth)acrylique contenant des monomères acrylates ou méthacrylates
b. un autre compartiment contenant ledit agent catalyseur de polymérisation.

## Patentansprüche

1. Zwei-Komponenten-Strukturkleber, umfassend:
a. ein (Meth)acrylharz, das Acrylat- oder Methacrylatmonomere enthält,
b. einen Polymerisationskatalysator, der zu dem Harz gegeben werden soll, damit die Polymerisation der Monomere initiiert wird, der einen Initiator für eine radikalische Polymerisation sowie ein Epoxysilan umfasst, wobei das Epoxysilan in einer Menge zwischen 1 und 30 Gewichts-% enthalten ist.

2. Zwei-Komponenten-Strukturkleber nach Anspruch 1, **dadurch gekennzeichnet, dass** das Epoxysilan in einer Menge zwischen 5 und 20 Gewichts-% des Polymerisationskatalysators enthalten ist.

3. Zwei-Komponenten-Strukturkleber nach Anspruch 1 oder 2, **dadurch gekennzeichnet, dass** der Polymerisationskatalysator höchstens 20 (Gewichts-)% Weichmacher umfasst.

4. Zwei-Komponenten-Strukturkleber nach einem der Ansprüche 1 bis 3, **dadurch gekennzeichnet, dass** der im Polymerisationskatalysator enthaltene Initiator für die radikalische Polymerisation ein Peroxid ist.

5. Zwei-Komponenten-Strukturkleber nach Anspruch 4, **dadurch gekennzeichnet, dass** das Peroxid Benzoylperoxid ist.

6. Zwei-Komponenten-Strukturkleber nach einem der Ansprüche 1 bis 5, **dadurch gekennzeichnet, dass** der Polymerisationskatalysator zwischen 5 und 40 Gewichts-% Polymerisationsinitiator enthält.

7. Zwei-Komponenten-Strukturkleber nach einem der Ansprüche 1 bis 6, **dadurch gekennzeichnet, dass** der Polymerisationskatalysator zwischen 10 und 20 Gewichts-% Polymerisationsinitiator enthält.

8. Zwei-Komponenten-Strukturkleber nach einem der Ansprüche 1 bis 7, **dadurch gekennzeichnet, dass** der Polymerisationskatalysator ferner ein Epoxidharz enthält.

9. Zwei-Komponenten-Strukturkleber nach einem der Ansprüche 1 bis 8, **dadurch gekennzeichnet, dass** der Polymerisationskatalysator ferner mineralische Füllstoffe enthält.

10. Zwei-Komponenten-Strukturkleber nach einem der Ansprüche 1 bis 9, **dadurch gekennzeichnet, dass** die Monomere des Harzes aus Methylmethacrylat und Ethylmethacrylat ausgewählt sind.

11. Zwei-Komponenten-Strukturkleber nach einem der Ansprüche 1 bis 9, **dadurch gekennzeichnet, dass** das Harz ferner mindestens ein weiteres Element enthält, das aus einem Elastomer-Blockcopolymer ausgewählt ist, das Styrol und Isopren enthält, einem Elastomer-Blockcopolymer, das Styrol und Butadien oder Ethylen enthält, einem Elastomer, einem Acrylatester-Monomer, in dem der Alkoholteil mindestens eine lineare Kette aus mindestens 6 Kohlenstoffatomen aufweist, einem Polymerisationsbeschleuniger, einem Rheologiemittel, einem Haftvermittler, einem Säuremonomer, Partikeln aus einer thermoplastischen Hülle und einem Elastomerkern (Acrylnitril-Butadien-Styrol-Partikel, Methacrylat-Butadien-Styrol-Partikel, Methacrylat-Acrylnitril-Butadien-Styrol-Partikel, Methacrylat-Acrylnitril-Partikel und Mischungen daraus).

12. Zwei-Komponenten-Strukturkleber nach Anspruch 11, **dadurch gekennzeichnet, dass** das Harz mindestens ein Blockcopolymer enthält, das aus der Gruppe ausgewählt ist, die aus Styrol-Isopren-Styrol(SIS)-Copolymeren, Styrol-Butadien-Styrol(SBS)-Copolymeren, Styrol-Isopren-Butadien-Styrol(SIBS)-Copolymeren, Styrol-Ethylen-Butylen-Styrol(SEBS)-Copolymeren und Mischungen aus diesen Copolymeren besteht.

13. Zwei-Komponenten-Strukturkleber nach Anspruch 11 oder 12, **dadurch gekennzeichnet, dass** das Harz ein Elastomer enthält, das aus der Gruppe bestehend aus funktionalisiertem Polybutadien, Polyisopren und Polychloropren ausgewählt ist.

14. Zwei-Strukturkleber nach einem der Ansprüche 11 bis 13, **dadurch gekennzeichnet, dass** das Harz ein Säuremonomer enthält, das aus der Gruppe ausgewählt ist, die aus einer ungesättigten Carbonsäure, Maleinsäure, Crotonsäure, Isophthalsäure, Fumarsäure und Methacrylsäure besteht, und/oder einen Bestandteil, der aus der Gruppe ausgewählt ist, die aus Isobornylacrylat (IBXA), 2-Hydroxyethylmethacrylat (HEMA), 2-Hydroxypropylmethacrylat (HPMA), 2-(Perfluoroctyl)ethylacrylat (POA), Tetrahydrofurfurylacrylat (THFA), Isobutoxymethylacrylamid (IBMA) und Mischungen dieser Verbindungen besteht, insbesondere der Mischung aus HEMA und HPMA.

15. Kartusche zum Auftragen eines Zwei-Komponenten-Strukturklebers nach einem der Ansprüche 1 bis 14, umfassend
a. eine Kammer, die das (Meth)acrylharz enthält, das Acrylat- oder Methacrylatmonomere enthält,
b. eine weitere Kammer, die den Polymerisationskatalysator enthält.

## Claims

1. Two-part structural adhesive comprising:
a. a (meth)acrylic resin containing acrylate or methacrylate monomers
b. a polymerization catalysing agent, intended to be added to the said resin in order to initiate the polymerization of said monomers, comprising an initiating agent for free radical polymerization and also an epoxidized silane, said epoxidized silane being between 1 and 30% by weight.

2. Two-part structural adhesive according to Claim 1, **characterized in that** the said epoxidized silane is between 5 and 20% by weight of the polymerization catalysing agent.

3. Two-part structural adhesive according to Claim 1 or 2, **characterized in that** the polymerization catalysing agent comprises at most 20% (by weight) of plasticizing agent.

4. Two-part structural adhesive according to one of Claims 1 to 3, **characterized in that** the initiating agent for free radial polymerization present in the polymerization catalysing agent is a peroxide.

5. Two-part structural adhesive according to Claim 4, **characterized in that** the said peroxide is benzoyl peroxide.

6. Two-part structural adhesive according to one of Claims 1 to 5, **characterized in that** the polymerization catalysing agent contains between 5 and 40% by weight of polymerization initiating agent.

7. Two-part structural adhesive according to one of Claims 1 to 6, **characterized in that** the polymerization catalysing agent contains between 10 and 20% by weight of polymerization initiating agent.

8. Two-part structural adhesive according to one of Claims 1 to 7, **characterized in that** the polymerization catalysing agent additionally contains an epoxide resin.

9. Two-part structural adhesive according to one of Claims 1 to 8, **characterized in that** the polymerization catalysing agent additionally contains inorganic fillers.

10. Two-part structural adhesive according to one of Claims 1 to 9, **characterized in that** said monomers of said resin are chosen from methyl methacrylate and ethyl methacrylate.

11. Two-part structural adhesive according to one of Claims 1 to 9, **characterized in that** said resin additionally contains at least one other element chosen from an elastomeric block copolymer containing styrene and isoprene, an elastomeric block copolymer containing styrene and butadiene or ethylene, an elastomer, an acrylate ester monomer in which the alcohol part exhibits at least one linear chain of at least 6 carbon atoms, a polymerization accelerator, a rheology agent, an adhesion promoter, an acid monomer, particles formed of a thermoplastic shell and of an elastomeric core (acrylonitrile-butadiene-styrene, methacrylate-butadiene-styrene, methacrylate-acrylonitrile-butadiene-styrene or methacrylate-acrylonitrile particles and the mixtures of these).

12. Two-part structural adhesive according to Claim 11, **characterized in that** said resin contains at least one block copolymer chosen from the group consisting of styrene-isoprene-styrene (SIS), styrene-butadiene-styrene (SBS), styrene-isoprene-butadiene-styrene (SIBS) and styrene-ethylene-butylene-styrene (SEBS) copolymers and blends of these copolymers.

13. Two-part structural adhesive according to Claim 11 or 12, **characterized in that** said resin contains an elastomer chosen from the group consisting of functionalized polybutadiene, polyisoprene and polychloroprene.

14. Bistructural adhesive according to one of Claims 11 to 13, **characterized in that** said resin contains an acid monomer chosen from the group consisting of unsaturated carboxylic acid, maleic acid, crotonic acid, isophthalic acid, fumaric acid and methacrylic acid, and/or a component chosen from the group consisting of isobornyl acrylate (IBXA), 2-hydroxyethyl methacrylate (HEMA), 2-hydroxypropyl methacrylate (HPMA), 2-(perfluorooctyl)ethyl acrylate (POA), tetrahydrofurfuryl acrylate (THFA), isobutoxymethylacrylamide (IBMA) and the mixtures of these compounds, in particular the mixture of HEMA and HPMA.

15. Cartridge for application of a two-part structural adhesive according to one of Claims 1 to 14, comprising:
a. a compartment containing said (meth)acrylic resin containing acrylate or methacrylate monomers
b. another compartment containing said polymerization catalysing agent.
